# EUROPEAN PATENT APPLICATION

(11) **EP 4 699 450 A1**
(43) Date of publication of application: **25.02.2026**
(21) Application number: 25179895.5
(22) Date of filing: 30.05.2025
(51) Int. Cl.: A23K 10/16, A23K 20/111, A23K 20/142, A23K 20/158, A23K 20/189, A23K 40/30, A23K 40/35, A23K 50/10

(54) **SCHIZOCHYTRIUM POWDER FOR REDUCING METHANE EMISSIONS FROM DAIRY COWS AND PREPARATION METHOD THEREOF**

(30) Priority: 20.08.2024 CN 202411142983
(71) Applicant: Xiamen Huison Biotech Co., Ltd., Xiamen, Fujian 361000 (CN)
(72) Inventor: CHEN, Liyi, Xiamen, 361000 (CN); ZHONG, Huichang, Xiamen, 361000 (CN); CHEN, Shuirong, Xiamen, 361000 (CN); HU, Yaru, Xiamen, 361000 (CN); ZHANG, Wei, Xiamen, 361000 (CN)
(74) Representative: Metida

(57) **Abstract**

this application relates to the technical field of feed, and specifically discloses a schizochytrium powder for reducing methane emissions from dairy cows, a method for preparing same, and a double-layer whole-cell microalgal schizochytrium powder or a whole-cell microalgal schizochytrium powder of a structure that contains a schizochytrium core and a double-layer outer coating, the powder being prepared by the method. Methanogens in a rumen can reduce carbon dioxide to CH₄ by using hydrogen. In a feed formulation of this application, a multi-layer core-coating structure is adopted; lysozyme is added in an outermost coating of a schizochytrium particle; and 4-hydroxy-3-methoxybenzoic acid, D-alloisoleucine, and D-2-aminobutyric acid are added in an intermediate coating to inhibit growth of Methanobrevibacter and Methanomicrobium, regulate microbial community structures, promote microbial community metabolism in the rumen to shift toward a propionic acid pathway, reduce the amount of acetic acid and an acetate-to-propionate ratio, promote digestion, and increase the VFA fermentation yield and the amount of propionic acid, thereby reducing methane emissions and promoting absorption of various nutrients of schizochytrium without affecting the fermentation effect of the microbial community. When put in long-term use, the feed formulation can significantly increase the content of nutrients such as DHA in milk.

## Description

### TECHNICAL FIELD

This application relates to the technical field of livestock husbandry, and in particular, to a schizochytrium powder for reducing methane emissions from dairy cows and a method for preparing same.

### BACKGROUND

With the acceleration of industrialization and continuous growth of population, global methane emissions have shown a continuous upward trend, posing a severe threat to the Earth's ecological environment and human health. Methane is a potent greenhouse gas, and the increase in methane emissions exacerbates global warming, leading to more frequent extreme weather events, and causing irreversible damage to ecosystems and human society.

Microorganisms in a rumen of a ruminant play a key role in digestion. Studies have shown that main methanogenic bacteria species are Methanobrevibacter and Methanomicrobium. These two bacteria species belong to dominant genera of methanogens in the rumen, accounting for approximately 62% and 15% of the total number of methanogens, respectively (Janssen and Kirs, 2008). Methanobrevibacter follows a hydrogenotrophic methanogenesis pathway, using hydrogen, carbon dioxide, and formate-produced by bacteria and fungi-as substrates to generate methane.

As for the propionate pathway, the paper *Fermentation of model hemicelluloses by Prevotella strains and Butyrivibrio fibrisolvens in pure culture and in ruminal enrichment* by Emerson E. L. and Weimer P. J. points out that different Prevotella species exhibit functional differences, but most of the Prevotella species produce propionic acid or succinic acid. The increase in the abundance of the Prevotella species can significantly promote the increase in propionic acid content, facilitate conversion of more pyruvic acid into propionic acid, and in turn, reduce the amount of acetic acid to reduce methane production. The sugar produced during the fermentation of fibrous materials is fermented into acetic acid, propionic acid, butyric acid, and volatile fatty acids (VFAs) under the action of ruminal microorganisms.

The feed raw materials eaten by ruminants are consumed by fungi, bacteria, protozoa, and the like in the rumen, and eventually turned into VFAs, NH₃, CO₂, CH₄, and H₂. Among these, the VFAs obtained by bacterial fermentation serve as a main energy source for the ruminants and are eventually digested and absorbed by the rumen.

Livestock husbandry is a major source of methane emissions, contributing 42.9% of the total agricultural emissions. The methane generated in ruminant production accounts for a vast majority of emissions of livestock husbandry, primarily because ruminants degrade carbohydrates through rumen fermentation. Different microbial species follow different pathways of fermentation to produce acids and hydrogen. The fermentation pathways for acetic acid, propionic acid, and butyric acid all provide energy and nutrients for animal bodies, but the pathway of acetic acid generates methane in the fermentation process, thereby not only exacerbating the greenhouse effect but also reducing the feed utilization rate. Therefore, using an effective method to reduce methane emissions from ruminants is a pressing challenge in the livestock husbandry.

### SUMMARY

In view of the technical problems in the prior art, a first aspect of this application discloses a method for preparing a schizochytrium powder for reducing methane emissions from dairy cows. The method includes the following steps:
S1: Dehydrating a schizochytrium fermentation broth to obtain microalgal cell sludge, and then subjecting the microalgal cell sludge to spray drying to obtain a whole-cell microalgal schizochytrium powder core; and
S2: Adding 4-hydroxy-3-methoxybenzoic acid, D-alloisoleucine, and D-2-aminobutyric acid into a fatty acid ester A, mixing such constituents, adding the whole-cell microalgal schizochytrium powder obtained in step S1, and then performing cold spraying to obtain a double-layer whole-cell microalgal schizochytrium powder.

In some specific embodiments of the first aspect of this application, the method further includes step S3:
S3: Mixing a fatty acid ester B with lysozyme, and then adding the double-layer whole-cell microalgal schizochytrium powder obtained in step S2, and performing cold spraying for a second time to form a whole-cell microalgal schizochytrium powder of a structure that contains a schizochytrium core and a double-layer outer coating.

The fatty acid ester A and the fatty acid ester B may be the same fatty acid ester or different fatty acid esters. In some specific embodiments, the types of fatty acid esters are enumerated.

KR1020180044051A mentions a feed composition for ruminants. The feed composition is configured to reduce methane gas in a rumen of a ruminant, and contains lysozyme as an active constituent. However, the lysozyme acts on not only Methanobrevibacter and Methanomicrobium, but also Prevotella. As a broad-spectrum antibacterial constituent, the lysozyme also inhibits other propionic and butyric acid-producing microbial communities in the rumen while reducing methane, thereby negatively impacting the production of ATP. Therefore, the lysozyme needs to be added in conjunction with other compounds. After inhibiting Methanobrevibacter and Methanomicrobium, the lysozyme works together with D-2-aminobutyric acid, D-alloisoleucine, and 4-hydroxy-3-methoxybenzoic acid to improve the distribution of microbial species, reduce the conversion of pyruvic acid to acetic acid, and decrease the amount of methane precursors, thereby reducing methane emissions, and at the same time, increasing the yield of VFAs, and preventing a decline in milk yield and milk fat content.

In some specific embodiments of the first aspect of this application, the schizochytrium fermentation broth in step S1 is further doped with an auxiliary material. The auxiliary material includes one or more of vitamin A, vitamin E, tea polyphenol, choline chloride, sodium carbonate, yeast protein powder, or potassium sulfate.

In some specific embodiments of the first aspect of this application, in step S1, vitamin A, vitamin E, or tea polyphenol is added at 8 to 12 g, for example, in some embodiments, 12 g, or, in some embodiments, 11 g, or, in some embodiments, 10 g, or, in some embodiments, 9 g, or, in some embodiments, 8 g per 1 kg of whole-cell microalgal schizochytrium powder by dry weight.

In some specific embodiments of the first aspect of this application, in step S1, choline chloride, sodium carbonate, or yeast protein powder is added at 28 to 32 g, for example, in some embodiments, 28 g, or, in some embodiments, 29 g, or, in some embodiments, 30 g, or, in some embodiments, 31 g, or, in some embodiments, 32 g per 1 kg of whole-cell microalgal schizochytrium powder by dry weight.

In some specific embodiments of the first aspect of this application, a mass percent of the 4-hydroxy-3-methoxybenzoic acid in step S2 is 15 wt% to 19 wt%, for example, in some embodiments, 15 wt%, or, in some embodiments, 16 wt%, or, in some embodiments, 17 wt%, or, in some embodiments, 18 wt%, or, in some embodiments, 19 wt%, based on a mass of the fatty acid ester in step S2.

In some specific embodiments of the first aspect of this application, a mass percent of the D-alloisoleucine in step S2 is 25 wt% to 29 wt%, for example, in some embodiments, 25 wt%, or, in some embodiments, 26 wt%, or, in some embodiments, 27 wt%, or, in some embodiments, 28 wt%, or, in some embodiments, 29 wt%, based on a mass of the fatty acid ester in step S2.

In some specific embodiments of the first aspect of this application, a mass percent of the D-2-aminobutyric acid in step S2 is 25 wt% to 29 wt%, for example, in some embodiments, 26 wt%, or, in some embodiments, 27 wt%, or, in some embodiments, 28 wt%, or, in some embodiments, 29 wt%, based on a mass of the fatty acid ester in step S2.

In some specific embodiments of the first aspect of this application, fatty acid ester A in step S2 is a mixture of one or more selected from palm fat powder, stearic acid, sorbitan monostearate, glyceryl monolaurate, monoglyceride, paraffin, beeswax, sucrose fatty acid ester, polyglycerol fatty acid ester, or hydrogenated vegetable oil.

In some specific embodiments of the first aspect of this application, a mass percent of the lysozyme in step S3 is 0.6 wt% to 2.0 wt%, for example, in some embodiments, 0.7 wt%, or, in some embodiments, 0.8 wt%, or, in some embodiments, 0.9 wt%, or, in some embodiments, 1.0 wt%, or, in some embodiments, 1.2 wt%, or, in some embodiments, 1.4 wt%, or, in some embodiments, 1.6 wt%, or, in some embodiments, 1.8, or, in some embodiments, 2.0 wt%, based on a mass of the fatty acid ester B.

In some specific embodiments of the first aspect of this application, the fatty acid ester B in step S3 is a mixture of one or more selected from palm fat powder, stearic acid, sorbitan monostearate, glyceryl monolaurate, monoglyceride, paraffin, beeswax, sucrose fatty acid ester, polyglycerol fatty acid ester, or hydrogenated vegetable oil.

In some specific embodiments of the first aspect of this application, a mass ratio of the fatty acid ester A mixture in step S2 to the whole-cell microalgal schizochytrium powder core in step S1 is 1 : (7 to 9), for example, in some embodiments, 1 : 7, or, in some embodiments, 1 : 8, or, in some embodiments, 1 : 9.

In some specific embodiments of the first aspect of this application, a mass ratio of the double-layer whole-cell microalgal schizochytrium powder to the fatty acid ester B mixture in step S2 is 1 : (6 to 9), for example, in some embodiments, 1 : 6, or, in some embodiments, 1 : 7, or, in some embodiments, 1 : 8, or, in some embodiments, 1 : 9.

A second aspect of this application discloses a schizochytrium powder for reducing methane emissions from dairy cows, the schizochytrium powder being prepared from methods including the method according to the first aspect. The schizochytrium powder is double-layer whole-cell microalgal schizochytrium powder (that is, whole-cell microalgal schizochytrium powder with a core and a single outer layer), or the schizochytrium powder is a whole-cell microalgal schizochytrium powder of a structure that contains a schizochytrium core and a double-layer outer coating.

A third aspect of this application discloses a feed containing the schizochytrium powder for reducing methane emissions from dairy cows according to the second aspect.

In this application, D-alloisoleucine (CAS: 1509-35-9), D-2-aminobutyric acid (CAS: 2623-91-8), lysozyme (CAS: 12650-88-3), VFAs, and 4-hydroxy-3-methoxybenzoic acid (CAS: 121-34-6) are used.

In this application, the fatty acid esters A and B are both fatty acid esters. The fatty acid ester in this application means a homogeneous mixture of one or more selected from palm fat powder, stearic acid, sorbitan monostearate, glyceryl monolaurate, monoglyceride, paraffin, beeswax, sucrose fatty acid ester, polyglycerol fatty acid ester, or hydrogenated vegetable oil.

### Composition of each basal ration is listed in the below table:

| Ingredient | Amount (dry matter) |
|---|---|
| Corn silage | 355 g |
| Corn | 120 g |
| Soybean meal | 200 g |
| Wheat middlings | 167 g |
| Wheat bran | 112 g |
| Palm fat powder | 13 g |
| Calcium chloride (as Ca) | 3 g |
| Magnesium oxide (as Mg) | 5 g |
| Calcium hydrophosphate | 7 g |
| Urea | 3 g |
| Salt | 5 g |
| Vitamin A | 500,000 IU |
| Vitamin D | 200,000 IU |
| Vitamin E | 1,250 IU |
| Zinc gluconate (as zinc) | 4,000 mg |
| Ferrous sulfate (as Fe) | 1,500 mg |
| Cobalt sulfate (as Co) | 40 mg |
| Manganese sulfate (as Mn) | 2,500 mg |
| Copper sulfate (as Cu) | 2,000 mg |

Reference: For the conventional nutrients in fermentation substrates, reference is made to Feed Analysis and Feed Quality Testing Technology, 4th edition, by Zhang Liying, China Agricultural University Press, 2016, Beijing.

Compared with the prior art, this application achieves at least the following beneficial effects:

The schizochytrium powder used in the technical solution hereof is of high oxidation resistance to prevent oxidation of unsaturated fatty acids both *in vivo* and *in vitro,* thereby achieving the effects of reducing methane, increasing VFA content, and enhancing absorption of docosahexaenoic acid (DHA). The methanogens in the rumen can use hydrogen to reduce carbon dioxide to CH₄. The feed formulation of this application adopts a multi-layer core-coating structure, and combines the microbial community-regulating chemical substances with multi-layer core-coated DHA particles. Therefore, the microbial community can be regulated more effectively, the absorption of VFA and DHA can be promoted, and the methane can be reduced by using just a single feed product, making it convenient to administer the feed.

The lysozyme is added in an outermost coating of the schizochytrium particle; and the 4-hydroxy-3-methoxybenzoic acid, D-alloisoleucine, and D-2-aminobutyric acid are added in an intermediate coating to inhibit growth of Methanobrevibacter and Methanomicrobium, regulate microbial community structures, promote microbial community metabolism in the rumen to shift toward a propionic acid pathway, reduce the amount of acetic acid and an acetate-to-propionate ratio, promote digestion, and increase the VFA fermentation yield and the amount of propionic acid, thereby promoting absorption of various nutrients of schizochytrium. When put in long-term use, the feed formulation can significantly increase the content of nutrients such as DHA in milk.

### BRIEF DESCRIPTION OF DRAWING

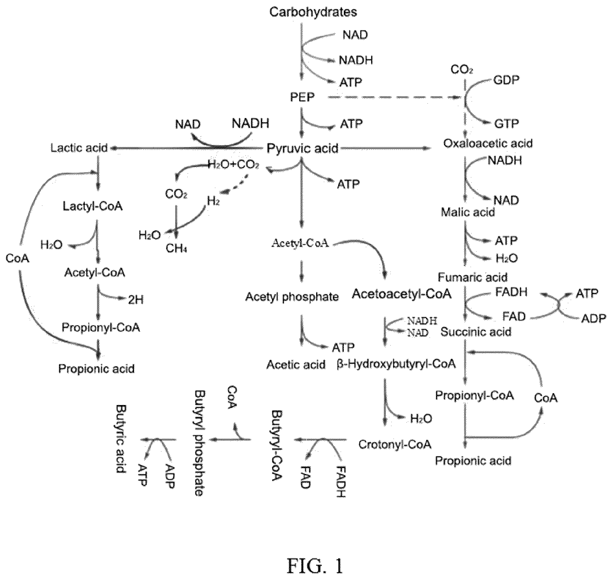

FIG. 1 shows a process in which sugar produced by fermentation of fibrous materials is fermented to produce acetic acid, propionic acid, butyric acid, and VFAs under the action of ruminal microorganisms in the prior art.

### DETAILED DESCRIPTION

this application is applicable to ruminants such as dairy cows and dairy goats, and dairy cows are used as an example for illustration herein.

### Embodiment 1

A method for preparing a schizochytrium powder additive applicable to dairy cows for reducing methane production includes the following steps:
Step 1: Add vitamin A, vitamin E, and tea polyphenol (the mass percent of each is 1 wt%, based on the dry weight of whole-cell microalgal schizochytrium powder), choline chloride, sodium carbonate, and yeast protein powder (the mass percent of each is 1 wt%, based on the dry weight of whole-cell microalgal schizochytrium powder) as well as potassium sulfate (15 g/L, based on the volume of a schizochytrium fermentation broth) into a fermentation broth containing schizochytrium at a concentration of 71 g/L; remove 90% of water to obtain a wet material; perform vacuumization and evaporation to obtain microalgal cell sludge; perform compounding, mixing, stirring, and emulsification; and then perform homogenization and spray drying to obtain a whole-cell microalgal schizochytrium powder.
Step 2: Add 4-hydroxy-3-methoxybenzoic acid (at a mass percent of 17 wt%, based on the mass of glyceryl monolaurate), D-alloisoleucine and D-2-aminobutyric acid (both at a mass percent of 27 wt%, based on the mass of glyceryl monolaurate) into the glyceryl monolaurate, and stir well to obtain a glyceryl monolaurate mixture. Mix every 10 parts of the glyceryl monolaurate mixture with 70 parts of the whole-cell microalgal schizochytrium powder prepared in step 1, and perform cold spraying to obtain double-layer whole-cell microalgal schizochytrium powder particles.
Step 3: Stir well palm fat powder and lysozyme (at a mass percent of 1.2 wt%, based on the mass of the palm fat powder) to obtain a palm fat powder mixture, mix 60 parts of double-layer whole-cell microalgal schizochytrium powder with 10 parts of the palm fat powder mixture, and perform cold spraying for a second time to obtain whole-cell microalgal schizochytrium powder particles and form whole-cell microalgal schizochytrium powder particles of a structure containing a schizochytrium core and a double-layer outer coating.

### Embodiment 2

A method for preparing a schizochytrium powder additive applicable to dairy cows for reducing methane production includes the following steps:
Step 1: Add vitamin A, vitamin E, and tea polyphenol (the mass percent of each is 1 wt%, based on the dry weight of whole-cell microalgal schizochytrium powder), choline chloride, sodium carbonate, and yeast protein powder (the mass percent of each is 1 wt%, based on the dry weight of whole-cell microalgal schizochytrium powder) as well as potassium sulfate (15 g/L, based on the volume of a schizochytrium fermentation broth) into a fermentation broth containing schizochytrium at a concentration of 71 g/L; remove 90% of water to obtain a wet material; perform vacuumization and evaporation to obtain microalgal cell sludge; perform compounding, mixing, stirring, and emulsification; and then perform homogenization and spray drying to obtain a whole-cell microalgal schizochytrium powder.
Step 2: Add 4-hydroxy-3-methoxybenzoic acid (at a mass percent of 17 wt%, based on the mass of glyceryl monolaurate), D-alloisoleucine and D-2-aminobutyric acid (both at a mass percent of 27 wt%, based on the mass of glyceryl monolaurate) into the glyceryl monolaurate, and stir well to obtain a glyceryl monolaurate mixture. Mix every 10 parts of the glyceryl monolaurate mixture with 70 parts of the whole-cell microalgal schizochytrium powder prepared in the previous step, and perform cold spraying to obtain double-layer whole-cell microalgal schizochytrium powder particles.
Step 3: Mix 60 parts of double-layer whole-cell microalgal schizochytrium powder with 10 parts of the palm fat powder mixture, and perform cold spraying for a second time to obtain whole-cell microalgal schizochytrium powder particles and form whole-cell microalgal schizochytrium powder particles of a structure containing a schizochytrium core and a double-layer outer coating.

### Comparative Embodiment 1

Comparative Embodiment 1 differs from Embodiment 1 in that D-alloisoleucine, D-2-aminobutyric acid, and 4-hydroxy-3-methoxybenzoic acid are not added in step 2.

### Comparative Embodiment 2

Comparative Embodiment 2 differs from Embodiment 1 in that D-alloisoleucine is not added in step 2.

### Comparative Embodiment 3

Comparative Embodiment 3 differs from Embodiment 1 in that 4-hydroxy-3-methoxybenzoic acid is not added in step 2.

### Comparative Embodiment 4

Comparative Embodiment 4 differs from Embodiment 1 in that 4-hydroxy-3-methoxybenzoic acid, D-alloisoleucine, and D-2-aminobutyric acid are not added in step 2, and lysozyme is not added in step 3.

### Embodiment 3

The algae powder particles prepared in Embodiments 1 to 2 and Comparative Embodiments 1 to 4 are applied as additives to fermentation tests such as methane test, gas production amount test, and VFA test. The specific methods are as follows:
Three healthy Holstein lactating dairy cows are selected, each with a body weight of 720±20 kg, and with similar milk yield and feed intake. All the cows are fitted with a permanent rumen fistula.

### Collecting rumen fluid

Before morning feeding, the chyme in the rumen of each Holstein lactating dairy cow is collected and filtered through 4 layers of gauze to obtain a rumen fluid. The collected rumen fluid is mixed well and placed in a thermos cup preheated at 39 °C and filled with carbon dioxide, and then brought back to the laboratory.

### Preparing a ruminal fermentation broth

Preparing a trace element solution A, a buffer solution B, a buffer solution C, a Na₂S reducing agent solution, and a resazurin indicator solution with reference to methods such as the Menke method. Preparing a ruminal buffer solution containing 400 mL of distilled water, 0.1 mL of the solution A, 200 mL of the solution B, 200 mL of the solution C, 1 mL of the resazurin solution, and 40 mL of the reducing agent solution. Mixing the ruminal liquid and the ruminal buffer solution at a (volume) ratio of 1 : 2 to form a mixed artificial ruminal culture fluid, during which carbon dioxide is continuously introduced to maintain an anaerobic environment.

### In vitro fermentation

Adding 10 g of schizochytrium powder compounded in Embodiments 1 to 2 and Comparative Embodiments 1 to 4 into every 1000 g of basic feed. Mixing well, and weighing out exactly 0.5 g of the resultant mixture to serve as a fermentation substrate, and placing the mixture into preheated glass syringes coated with vaseline. Adding 30 ml of artificial ruminal culture fluid into each syringe. Finally, exhausting air out of the syringes, sealing the syringes with a sealing film. Recording the initial scale value, and placing the syringes into a 39 °C constant-temperature shaking water bath for timed culture. Each treatment in every batch of tests is performed in triplicate.

### Testing metrics

Recording the gas production amount at the end of 3, 6, 9, 12, 24, and 48 hours, respectively. Collecting all gas in each syringe at the end of 3, 6, 9, 24, and 48 hours, respectively. Injecting the gas into a gas sample bag. Determining the methane yield of the collected gas by using a gas chromatograph. Calculating the proportion of the methane based on the gas production amount and the CH₄ yield. Terminating the fermentation in the syringes in the water bath at the end of 48 h of the *in vitro* fermentation test, and then pouring the culture fluid into a centrifuge tube. Determining the pH value in the fermentation broth by using a pH meter. Placing the fermentation broth is centrifuged in a centrifuge after the pH value is determined. Taking a supernatant for measuring ammonia nitrogen and VFAs. Determining the content of the NH₃-N according to a phenol-sodium hypochlorite colorimetric method by using a microplate reader, and determining the content of the VFAs by using a high-performance gas chromatograph.

Method for determining methane content: Gas chromatography is performed by using a gas chromatograph (Shimadzu 2014C) equipped with a thermal conductivity detector (TCD) to determine the concentration of CH₄ in a gas sample. The calibration curve for CH₄ is constructed by using standard gas concentrations at 5%, 1%, 0.5%, and 0.1% (v/v).

VFAs are analyzed by using gas chromatography in accordance with the standard T/NAIA 0005-2020 under the following test conditions:
Chromatographic column: Agilent DB-WAX capillary column (30 m × 0.32 mm × 0.25 µm); initial column temperature 65 °C, which increases to 190 °C at a rate of 12.5 °C/min; sample inlet temperature: 230 °C; detector temperature: 290 °C; carrier gas: high-purity nitrogen; constant pressure: 100 KPa; air flow rate: 400 mL/min; hydrogen flow rate: 40 mL/min; make-up gas flow rate: 30 mL/min; sample injection mode: split injection with a split ratio of 25 : 1; injection volume: 1 µL.

### Test results

As shown in Table 1, the *in vitro* gas production amount in Embodiment 1 is significantly lower than that of the other five groups (P < 0.05). When added, the algae powder in Embodiment 1 can significantly reduce the methane emission amount and the proportion of methane in the total gas production amount at the end of 3 h, 6 h, 9 h, 24 h, and 48 h, respectively (P < 0.01).

**Table 1 Effects of in vitro fermentation on gas production of dairy cows**

| Item | Treatment group | | | | | | SEM | P-value |
|---|---|---|---|---|---|---|---|---|
| | Embodiment 1 | Embodiment 2 | Comparative Embodiment 1 | Comparative Embodiment 2 | Comparative Embodiment 3 | Comparative Embodiment 4 | | |
| 3h | | | | | | | | |
| Gas production amount, mL | 36.2 | 45.4 | 34.5 | 33.7 | 35.2 | 44.1 | 1.03 | 0.45 |
| Methane yield, mL | 0.28^{a} | 0.49^{c} | 0.30^{b} | 0.30^{b} | 0.31^{b} | 0.52^{c} | 0.01 | < 0.01 |
| Methane proportion, % | 0.76 | 1.08 | 0.88 | 0.90 | 0.89 | 1.17 | 0.04 | 0.27 |

| 6h | | | | | | | | |
|---|---|---|---|---|---|---|---|---|
| Gas production amount, mL | 35.3 | 34.2 | 27.4 | 26.6 | 27.1 | 31.5 | 0.44 | 0.76 |
| Methane yield, mL | 0.37^{a} | 0.39^{d} | 0.35^{b} | 0.32^{b} | 0.35^{b} | 0.42^{c} | 0.01 | < 0.01 |
| Methane proportion, % | 1.06 | 1.15 | 1.27 | 1.25 | 1.30 | 1.32 | 0.11 | 0.03 |

| 9h | | | | | | | | |
|---|---|---|---|---|---|---|---|---|
| Gas production amount, mL | 34.5 | 35.8 | 24.1 | 25.4 | 27.6 | 33.2 | 0.65 | 0.04 |
| Methane yield, mL | 0.28^{a} | 0.35^{d} | 0.27^{b} | 0.27^{b} | 0.32^{b} | 0.34^{c} | 0.01 | < 0.01 |
| Methane proportion, % | 0.82 | 0.98^{d} | 1.11 | 1.08 | 1.15 | 1.03 | 0.08 | 0.13 |

| 24h | | | | | | | | |
|---|---|---|---|---|---|---|---|---|
| Gas production amount, mL | 47.5 | 49.3 | 35.2 | 37.5 | 36.6 | 48.1 | 1.06 | 0.83 |
| Methane yield, mL | 0.56^{a} | 0.74^{d} | 0.62^{b} | 0.60^{b} | 0.67^{b} | 0.97^{c} | 0.04 | < 0.01 |
| Methane proportion, % | 1.17^{a} | 1.42^{d} | 1.75^{b} | 1.61^{b} | 1.83^{b} | 2.02^{c} | 0.13 | < 0.01 |

| 48h | | | | | | | | |
|---|---|---|---|---|---|---|---|---|
| Gas production amount, mL | 20.2 | 20.8 | 18.7 | 17.3 | 21.5 | 20.1 | 0.33 | 0.22 |
| Methane yield, mL | 0.16^{a} | 0.25^{d} | 0.21^{b} | 0.20^{b} | 0.21^{b} | 0.26^{c} | 0.01 | < 0.01 |
| Methane proportion, % | 0.82^{a} | 1.21^{d} | 1.13^{b} | 1.19^{b} | 1.18^{b} | 1.32^{c} | 0.09 | < 0.01 |

| | | | | | | | | |
|---|---|---|---|---|---|---|---|---|
| Note: The values with different lowercase superscript letters in the same column indicate significant differences (P < 0.05), and the values with no superscripts or with the same superscript letter indicate no significant differences (P > 0.05). | | | | | | | | |

Table 2 shows the test data for total VFAs, acetic acid, propionic acid, total butyric acid, and an acetate-to-propionate ratio at the end of 48 h.

**Table 2 Content of each constituent of supernatant**

| Item | Treatment group | | | | | | SEM | P-value |
|---|---|---|---|---|---|---|---|---|
| | Embodiment 1 | Embodiment 2 | Comparative Embodiment 1 | Comparative Embodiment 2 | Comparative Embodiment 3 | Comparative Embodiment 4 | | |
| pH | 6.95 | 6.84 | 6.74 | 6.69 | 6.89 | 6.86 | 0.40 | 0.66 |
| Ammonia nitrogen (mg/dL) | 11.59 | 10.53 | 7.25 | 8.67 | 9.52 | 10.91 | 0.61 | 0.34 |
| Total VFAs (mmol/L) | 85.85 | 82.32 | 66.64 | 67.42 | 65.02 | 75.27 | 1.91 | 0.16 |
| Acetic acid (mmol/L) | 42.85^{a} | 40.68^{d} | 41.97^{b} | 43.23^{b} | 42.33^{b} | 50.21^{c} | 1.39 | 0.03 |
| Propionic acid (mmol/L) | 18.33^{a} | 15.92^{d} | 12.81^{b} | 11.22^{b} | 10.74^{b} | 12.17^{c} | 0.71 | 0.04 |
| Total butyric acid (mmol/L) | 10.87 | 10.29 | 7.74 | 9.16 | 8.34 | 9.72 | 0.56 | 0.65 |
| Acetate-to-propionate ratio | 2.33^{a} | 2.56^{d} | 3.27^{b} | 3.85^{b} | 3.94^{b} | 4.26^{c} | 0.25 | 0.02 |

| | | | | | | | | |
|---|---|---|---|---|---|---|---|---|
| Note: The values with different lowercase superscript letters in the same column indicate significant differences (P < 0.05), and the values with no superscripts or with the same superscript letter indicate no significant differences (P > 0.05). | | | | | | | | |

In Embodiment 1, the algae powder significantly increases the content of the propionic acid (P < 0.05), and significantly reduces the content of the acetic acid and the acetate-to-propionate ratio (P < 0.05); and the acetic acid content and the acetate-to-propionate ratio are significantly lower than those of the other 5 groups (P < 0.05).

### Embodiment 4

Twenty-four Holstein lactating dairy cows, with the same body size, age period, and feed intake as in Embodiment 3 but without permanent rumen fistulas, are selected and divided into four feeding groups 1 to 4, each group including 6 cows. The test results are averaged out, and the feeding is performed in the following manner:
According to the table of composition of each basal ration, each cow in feeding groups 1 to 3 is fed a ration twice a day, where the ration includes 150 g of algae powder particles in Embodiment 1, Embodiment 2, or Comparative Embodiment 4 (Embodiment 1 corresponds to feeding group 1, Embodiment 2 corresponds to feeding group 2, and Comparative Embodiment 4 corresponds to feeding group 3) in combination with 1 kg of the basal ration. This ration of feed is administered for 10 consecutive days.

According to the table of composition of each basal ration, each cow in feeding group 4 is fed a ration twice a day, where the ration includes 1.15 kg of the basal ration (without any algae powder particles). This ration of feed is administered for 10 consecutive days.

On the 11^{th} day, under normal feeding conditions, the following metrics are measured: the milk yield, milk fat percentage, milk protein percentage, DHA content in milk, total solid content in milk, and fat-corrected milk (FCM).

### Milk sampling method

Milk samples are collected with a sampler. A total of 50 mL of milk samples is collected at a ratio of morning : noon : evening = 4 : 3 : 3. After being doped with a milk sample preservative, the milk samples are sent to a measurement center, where the milk fat is detected and the milk DHA content is analyzed by using a near-infrared device. For each group of cows, a GreenFeed system is applied, and an infrared sensor is fitted on the head of each cow to monitor emissions of methane and carbon dioxide.

### Test results

As shown in Table 3, the added schizochytrium powder significantly increases the DHA content in milk, and the DHA content in feeding group 1 is significantly higher than that in the other 3 groups (P < 0.05).

**Table 3 Effects of schizochytrium powder on production performance of dairy cows**

| Item | Treatment group | | | | SEM | P-value |
|---|---|---|---|---|---|---|
| | Feeding group 1 | Feeding group 2 | Feeding group 3 | Feeding group 4 | | |
| Dry matter intake (kg/d) | 22.07 | 22.15 | 21.79 | 22.57 | 0.497 | 0.14 |
| Milk yield (kg/d) | 25.94 | 24.52 | 21.59 | 21.12 | 0.517 | 0.12 |
| Milk fat percentage (%) | 3.18 | 3.13 | 3.12 | 3.03 | 0.092 | 0.20 |
| Milk protein percentage (%) | 3.47 | 3.43 | 3.39 | 3.34 | 0.095 | 0.36 |
| Lactose percentage (%) | 5.14 | 5.16 | 5.11 | 5.18 | 0.090 | 0.75 |
| DHA content in milk (mg/100 g) | 21.56^{a} | 20.24^{b} | 17.87^{c} | 0.00^{d} | 0.209 | < 0.01 |
| Total solid content in milk (%) | 13.61 | 13.57 | 13.32 | 13.24 | 0.161 | 0.31 |
| 4% FCM (kg) | 24.18 | 22.49 | 21.38 | 20.00 | 0.642 | 0.26 |

| | | | | | | |
|---|---|---|---|---|---|---|
| Note: The values with different lowercase superscript letters in the same column indicate significant differences (P < 0.05), and the values with no superscripts or with the same superscript letter indicate no significant differences (P > 0.05). | | | | | | |

As shown in Table 4, the amount of emissions of methane and carbon dioxide in feeding groups 1 and 2 (P<0.05), especially in feeding group 1, is significantly lower than that in the other 3 groups (P < 0.01).

**Table 4 Effects of feed of this application on emissions of methane and carbon dioxide from rumens of dairy cows**

| Item | Treatment group | | | | SEM | P-value |
|---|---|---|---|---|---|---|
| | Feeding group 1 | Feeding group 2 | Feeding group 3 | Feeding group 4 | | |
| Amount of methane emissions (g/d) | 255.68^{a} | 272.49^{b} | 309.51^{c} | 311.56^{d} | 0.497 | < 0.01 |
| Amount of carbon dioxide emissions (g/d) | 6582.34 | 6638.27 | 6715.73 | 6755.67 | 0.517 | 0.22 |

| | | | | | | |
|---|---|---|---|---|---|---|
| Note: The values with different lowercase superscript letters in the same column indicate significant differences (P < 0.05), and the values with no superscripts or with the same superscript letter indicate no significant differences (P > 0.05). | | | | | | |

In summary, the basal diet of dairy cows doped with the cold-sprayed schizochytrium powder particles containing the lysozyme, D-alloisoleucine, D-2-aminobutyric acid, and 4-hydroxy-3-methoxybenzoic acid can significantly reduce methane emissions and increase the DHA content in milk. Using the D-alloisoleucine and the D-2-aminobutyric acid as culture amino acids and using the 4-hydroxy-3-methoxybenzoic acid as an inhibitor can significantly change the structure and composition of the microbial community, promote a shift from an acid-producing biological system of rumens toward a microbial community that metabolically produces propionic acid/butyric acid, improve the VFA-producing ability of the microbial community, increase the DHA content, effectively reduce the methane production, increase the propionic acid percentage, reduce the acetate-to-propionate ratio, and reduce the hydrogen accumulation caused by disrupted methanogenesis.

## Claims

1. A method for preparing a schizochytrium powder for reducing methane emissions from dairy cows, **characterized in that** the method comprises:
S1: dehydrating a schizochytrium fermentation broth to obtain microalgal cell sludge, and then subjecting the microalgal cell sludge to spray drying to obtain a whole-cell microalgal schizochytrium powder core; and
S2: adding 4-hydroxy-3-methoxybenzoic acid, D-alloisoleucine, and D-2-aminobutyric acid into a fatty acid ester A, mixing such constituents, adding the whole-cell microalgal schizochytrium powder obtained in step S1, and then performing cold spraying to obtain a double-layer whole-cell microalgal schizochytrium powder.

2. The method for preparing a schizochytrium powder for reducing methane emissions from dairy cows according to claim 1, **characterized in that** the method further comprises step S3:
S3: mixing a fatty acid ester B with lysozyme, and then adding the double-layer whole-cell microalgal schizochytrium powder obtained in step S2, and performing cold spraying for a second time to form a whole-cell microalgal schizochytrium powder of a structure that contains a schizochytrium core and a double-layer outer coating.

3. The method for preparing a schizochytrium powder for reducing methane emissions from dairy cows according to claim 1 or 2, **characterized in that**
the schizochytrium fermentation broth in step S1 is further doped with an auxiliary material, and the auxiliary material comprises one or more of vitamin A, vitamin E, tea polyphenol, choline chloride, sodium carbonate, yeast protein powder, or potassium sulfate.

4. The method for preparing a schizochytrium powder for reducing methane emissions from dairy cows according to claim 2 or 3, **characterized in that**
in step S1, vitamin A, vitamin E, or tea polyphenol is added at 8 to 12 g per 1 kg of whole-cell microalgal schizochytrium powder by dry weight, and/or, in step S1, choline chloride, sodium carbonate, or yeast protein powder is added at 28 to 32 g per 1 kg of whole-cell microalgal schizochytrium powder by dry weight.

5. The method for preparing a schizochytrium powder for reducing methane emissions from dairy cows according to any one of claims 1 to 4, **characterized in that** a mass percent of the 4-hydroxy-3-methoxybenzoic acid in step S2 is 15 wt% to 19 wt%, preferably 17 wt%, based on a mass of the fatty acid ester A in step S2; and/or, a mass percent of the D-alloisoleucine in step S2 is 25 wt% to 27 wt%, preferably 25 wt%, based on a mass of the fatty acid ester A in step S2; and/or, a mass percent of the D-2-aminobutyric acid in step S2 is 25 wt% to 27 wt%, preferably 25 wt%, based on a mass of the fatty acid ester A in step S2.

6. The method for preparing a schizochytrium powder for reducing methane emissions from dairy cows according to any one of claims 1 to 5, **characterized in that**
fatty acid ester A in step S2 is a mixture of one or more selected from palm fat powder, stearic acid, sorbitan monostearate, glyceryl monolaurate, monoglyceride, paraffin, beeswax, sucrose fatty acid ester, polyglycerol fatty acid ester, or hydrogenated vegetable oil.

7. The method for preparing a schizochytrium powder for reducing methane emissions from dairy cows according to any one of claims 2 to 6, **characterized in that** a mass percent of the lysozyme in step S3 is 0.6 wt% to 2 wt%, preferably, 1.2 wt%, based on a mass of the fatty acid ester B; and/or, the fatty acid ester B in step S3 is a mixture of one or more selected from palm fat powder, stearic acid, sorbitan monostearate, glyceryl monolaurate, monoglyceride, paraffin, beeswax, sucrose fatty acid ester, polyglycerol fatty acid ester, or hydrogenated vegetable oil.

8. The method for preparing a schizochytrium powder for reducing methane emissions from dairy cows according to any one of claims 2 to 7, **characterized in that**
a mass ratio of the fatty acid ester A mixture in step S2 to the whole-cell microalgal schizochytrium powder core in step S1 is 1 : (7 to 9), preferably 1 : 7; and/or, a mass ratio of the double-layer whole-cell microalgal schizochytrium powder to the fatty acid ester B mixture in step S3 is 1 : (6 to 9), and preferably 1 : 6.

9. An algae powder particle prepared by the preparation method according to any one of claims 1 to 8.

10. A feed comprising the algae powder particle according to claim 9.
